# EUROPEAN PATENT APPLICATION

(11) **EP 2 405 202 A1**
(43) Date of publication of application: **11.01.2012**
(21) Application number: 10748683.9
(22) Date of filing: 26.02.2010
(51) Int. Cl.: F24C 1/00, F24C 11/00

(54) **COOKING DEVICE**

(30) Priority: 02.03.2009 JP 2009048197
(71) Applicant: Sharp Kabushiki Kaisha, Osaka-shi, Osaka 545-8522 (JP)
(72) Inventor: MINEOKA, Tatsuya, Osaka 545-8522 (JP); TAMURA, Akio, Osaka 545-8522 (JP)
(74) Representative: Treeby, Philip David William
(86) International application number: PCT/JP2010/053094
(87) International publication number: WO 2010/101088

(57) **Abstract**

A cooking device includes a pot (30) having a nozzle (32) for steam blow-off and a handle (50), a housing part (21, 23, 24) for housing the pot (30), a connection part (26) to which the nozzle (32) of the pot (30) housed in the housing part (21, 23, 24) is connected, a heater part (22) for heating the pot (30) housed in the housing part (21, 23, 24), and a heating chamber (12) to which steam is supplied from the pot (30).

## Description

### TECHNICAL FIELD

The present invention relates to a cooking device.

### BACKGROUND ART

There has been a conventional cooking device that heats and cooks food with use of steam produced by a steam producing unit (see JP 2007-32963 A (PTL 1), for instance).

The cooking device has a detachable water tank for supplying water into a pot in the steam producing unit. As tap water is evaporated, scale components emerging in the tap water remains in the water without being evaporated. In the cooking device, which includes a drain mechanism, almost all of the scale components can be discharged through drain pipes, whereas the scale gradually adheres to piping paths. Therefore, a configuration is provided in which permanent maintenance of performance is attempted by periodic citrate washing. This requires a user to spend efforts in some degree. Also, requirement of providing the drain mechanism disadvantageously causes increase in number of device components and hence increase in cost of the device.

### CITATION LIST

### Patent Literature

PTL1: JP 2007-32963 A

### SUMMARY OF INVENTION

### Technical Problem

An object of the invention is to provide a cooking device in which a configuration thereof is simplified by omission of a water tank by provision of a detachable pot of a steam producing unit and in which the detached pot can be washed so that scale can easily be eliminated.

### Solution to Problem

A cooking device according to the present invention includes:
a detachable pot having a nozzle for steam blow-off and a handle,
a housing part for housing the pot,
a connection part to which the nozzle of the pot housed in the housing part is connected,
a heater part for heating the pot housed in the housing part, and
a heating chamber that is supplied with steam from the pot.

According to the configuration described above, the detachable pot containing a required quantity of water is put in the housing part with the handle of the pot held in hand, and the water in the pot is thereafter evaporated by heating of the pot by the heater part. Then steam produced in the pot is blown off through the nozzle and is supplied into the heating chamber for cooking food. The provision of the detachable pot for a steam producing unit eliminates a water tank and thereby helps simplify the configuration of the cooking device. Also, the pot detached can be washed so that scale can easily be eliminated.

In one embodiment, the cooking device further includes a guiding part for guiding the nozzle of the pot with respect to a vertical direction and a left-right direction toward a position for connection to the connection part when the pot is inserted into the housing part from an insertion opening located on a front side of the cooking device.

According to the embodiment, the nozzle of the pot is guided by the guiding part with respect to the vertical direction and the left-right direction toward the position for connection to the connection part when the pot is inserted from the insertion opening on the front side into the housing part, so that the nozzle of the pot can reliably be connected to the connection part. In application of such a cooking device to a domestic cooking heater or the like, the pot can easily be inserted into the housing part and can reliably be placed in position in the housing part even if the position of insertion of the pot is below eye level, so that heating of the pot emptied by inclination thereof or the like can be prevented. Besides, there is no fear of a burn of a hand or the like because the pot is inserted into and drawn out of the housing part with the handle of the pot held in the hand. As a result, operability and safety of the cooking device from which the pot of the steam producing unit can be detached can be improved.

In one embodiment, the guiding part is provided on an upper side of the housing part and the guiding part has an upper tapered surface which gradually lowers from a side of the insertion opening toward a side of the connection part, and opposed side tapered surfaces which are provided on both sides of the upper tapered surface, with distances between the opposed side tapered surfaces gradually narrowing toward the side of the connection part.

In the embodiment, the nozzle of the pot inserted from the insertion opening is guided with respect to the vertical direction by the upper tapered surface of the guiding part that gradually lowers from the side of the insertion opening toward the side of the connection part, and the nozzle of the pot is guided with respect to the left-right direction by both the side tapered surfaces of the guiding part in which the distances therebetween gradually narrow toward the side of the connection part, so that the nozzle of the pot can easily be guided toward the position for connection to the connection part. In addition, positioning the nozzle of the pot relative to the connection part results in determination of a relative positional relation between the pot and the heater part and thus makes it possible to reliably place the pot in the housing part.

In one embodiment, the connection part is arranged and configured to be capable of fluctuating or swinging to follow the nozzle of the pot to be housed in the housing part.

In the embodiment, the connection part is arranged and configured to be capable of vertically moving and following the nozzle of the pot to be housed in the housing part. Thus, reliable connection can be attained with the connection part following the position of the nozzle, even if the position for connection of the nozzle of the pot with the connection part deviates because of variation in manufacture.

In one embodiment, the cooking device further includes a front plate that is arranged at a lower part in the insertion opening of the housing part in such a manner that the front plate is not in contact with a metal part that is to be heated by the heater part.

In the embodiment, the front plate is provided on the lower side in the insertion opening of the housing part so as not to be in contact with the metal part that is heated by the heater part, and thus a burn of a hand or the like can reliably be prevented, when the pot is drawn and inserted.

In one embodiment, the cooking device further includes a pot detection part for detecting whether the pot has been housed in the housing part.

In the embodiment, on condition that the pot is not housed in the housing part or that the pot is not placed in a right position in the housing part because of inclination of the pot or the like, energization of the heater part can be stopped by the pot detection part detecting whether the pot has been housed or not in the housing part, so that safety can be improved.

In one embodiment, the cooking device further includes a water detection part for detecting whether a water level in the pot is above a predetermined water level.

In the embodiment, by the water detection part detecting whether the water level in the pot is above a predetermined water level or not, presence of an amount of water required for cooking can be checked and heating of the pot having run out of water in middle of cooking can be prevented. Besides, heating of the pot containing no water from beginning can be prevented.

In one embodiment, the cooking device further includes a temperature sensor for detecting a temperature of the heater part, and a temperature increase detection part for detecting a quantity of an increase in the temperature of the heater part in a predetermined period on basis of the temperature of the heater part detected by the temperature sensor.

In the embodiment, the quantity of an increase in the temperature of the heater part in the predetermined period is detected by the temperature increase detection unit 0 on basis of the temperatures of the heater part that are detected by the temperature sensor, and thus it can be determined whether an adequate quantity of water is in the pot, whether the pot (e.g., a bottom part of the pot to be heated by the heater part) is in contact with the heater part, or the like, on basis of the quantity of the increase in the temperature of the heater part in the predetermined period.

In one embodiment, the cooking device further includes an energization interrupting part for interrupting energization of the heater part on condition that the temperature of the heater part is not lower than a predetermined temperature.

In the embodiment, energization of the heater part can be interrupted by the energization interrupting part in case that the heater part is abnormally overheated by heating of the empty pot, for instance, and thus safety is improved.

In one embodiment, the cooking device further includes a fan for discharging air, taken in from the insertion opening on the front side of the housing part, through a ventilation path to rear of the housing part.

In the embodiment, air taken in from the insertion opening on the front side of the housing part is discharged by the fan through a ventilation path to outside, thus air in the housing part is inhibited from having a high temperature while the pot is being heated by the heater part, and hot air is prevented from blowing frontward out of the insertion opening of the housing part and from causing a burn of a person. In addition, members of the housing part and parts surrounding the housing part, excluding the pot and the heater part, can be inhibited from having high temperatures when the pot is heated by the heater part.

In one embodiment, the pot includes a heating container mounted with the handle. A plurality of protrusions are provided on a surface of the handle that faces the heating container, and the handle and the heating container are in point contact or in line contact with each other through the plurality of protrusions.

In the embodiment, the handle is mounted on the heating container, in a state in which the handle and the heating container are in point contact (or line contact) with each other through the plurality of protrusions provided on the surface of the handle of the pot that faces the heating container, thus transfer of heat of the heating container to the handle is impeded and the handle is prevented from having high temperatures. Therefore, the pot can more safely be detached and attached. In addition, even if the handle is molded from resin, fusion of the handle is prevented when heating of the empty pot is prolonged.

In one embodiment, the cooking device further includes a check valve provided in the connection part to close a path through the connection part when the nozzle of the pot is not connected to the connection part.

In the embodiment, when the nozzle of the pot is not connected to the connection part, the path through the connection part is closed by the check valve provided in the connection part, and thus hot air from the heating chamber is prevented from reversely flowing into the housing part on condition that the pot is detached from the housing part. Therefore, a burn of a user and damage to the housing part from a high temperature, and/or the like can be prevented.

In one embodiment, the heater part is arranged to heat at least a bottom part of the pot housed in the housing part, and the cooking device includes a spring member provided on an upper side of the housing part to bias downward the pot housed in the housing part.

In the embodiment, the pot housed in the housing part is biased downward by the spring member provided on the upper side of the housing part, and contact between at least the bottom part of the pot and the heater part is thereby ensured, so that heat conduction between the heater part and the pot is improved.

In one embodiment, the spring member includes an engagement protruding part or an engagement recessed part that engages with an recessed part or a protruding part provided on top of the pot while the pot is housed in the housing part.

In the embodiment, the engagement protruding part (or the engagement recessed part) of the spring member engages with the recessed part (or the protruding part) provided on top of the pot housed in the housing part. Thus, positioning of the pot in front-back and left-right directions can be attained while the pot is biased downward by the spring member, so that contact between the pot and the heater part can reliably be attained with a specified positional relation.

In one embodiment, the cooking device further includes a casing inside which the pot, the housing part, the connection part, the heater part, and the heating chamber are placed, wherein the housing part is arranged in the casing, with the insertion opening of the housing part facing forward, and the heating chamber is arranged on a lateral side of the housing part in the casing, with an opening of the heating chamber facing forward.

In the embodiment, the housing part is placed in the casing so that the insertion opening of the housing part faces forward. Also, the heating chamber is placed on a lateral side of the housing part in the casing so that the opening of the heating chamber faces forward. Thus, the housing part and the heating chamber are arranged along a lateral direction on the front side of the casing, the upper surface of the casing can be made flat or horizontal so that an IH heater, an electric cooking stove, and/or gas cooking stove can be placed thereon, and a height of the casing can be decreased so as to be easily suited to a built-in kitchen of JIS (Japanese Industrial Standards) under a restriction on a height thereof and the like.

In one embodiment, the cooking device further includes a heating device for cooking that is placed on a top face of the casing.

In the embodiment, a cooking device suited to a domestic built-in kitchen can be obtained by placement of the housing part and the heating chamber on the front side in the casing and by placement of the heating device for cooking on the top face of the casing.

In one embodiment, the cooking device further includes a single door provided on a front side of the casing to simultaneously open or close the insertion opening of the housing part and the opening of the heating chamber.

In the embodiment, by simultaneous opening and closure of the insertion opening of the housing part and the opening of the heating chamber by the single door that is provided on the front side of the casing, a number of components of the cooking device can be reduced and safety is improved because a number of times of unnecessary draws of the pot from the housing part is reduced in cooking with use of the heating chamber 112.

### Advantageous Effects of Invention

As is apparent from the above, according to the present invention, the provision of the detachable pot for a steam producing unit eliminates a water tank and thereby helps simplify the configuration of the cooking device. Also, the pot detached can be washed so that scale can easily be eliminated.

### BRIEF DESCRIPTION OF DRAWINGS

Fig. 1 is a perspective view of an IH cooking heater that is an example of a cooking device in accordance with a first embodiment of the invention, as seen looking diagonally from upper front side thereof;
Fig. 2 is a perspective view of a steam producing unit of the IH cooking heater;
Fig. 3 is a top plan view of the steam producing unit;
Fig. 4 is a side view of the steam producing unit;
Fig. 5 is a schematic section taken along line V-V of Fig. 3;
Fig. 6 is a side view of a pot of the steam producing unit;
Fig. 7 is a side view of a top lid of the pot;
Fig. 8 is a bottom plan view of the top lid of the pot;
Fig. 9 is a bottom plan view of the top lid of the pot that is mounted with a handle;
Fig. 10 is a vertical section of the pot;
Fig. 11 is a side view of a float accommodated in a float housing part of the pot;
Fig. 12 is a perspective view of a built-in kitchen in which an IH cooking heater as an example of the cooking device in accordance with a second embodiment of the invention is integrated;
Fig. 13 is a perspective view of the IH cooking heater as seen looking diagonally from upper front side thereof;
Fig. 14 is a schematic section of the IH cooking heater as seen looking from front side;
Fig. 15 is a schematic diagram illustrating an internal structure of the IH cooking heater as seen looking from above;
Fig. 16 is a schematic section taken along line A-A of Fig. 15;
Fig. 17 is a schematic section taken along line B-B of Fig. 15;
Fig. 18 is a control block diagram for the IH cooking heater;
Fig. 19 is a perspective view of the pot;
Fig. 20 is a perspective view of a handle of the pot of the IH cooking heater;
Fig. 21 is a top plan view of the handle of the pot;
Fig. 22 is a front view of the handle of the pot;
Fig. 23 is a perspective view of an important part of a housing part for housing the pot;
Fig. 24 is a section of the important part of the housing part;
Fig. 25 is a perspective view of a spring plate;
Fig. 26 is a side view of the housing part and a connection part of the steam producing unit;
Fig. 27 is a section of the connection part; and
Fig. 28 is a section illustrating the connection part to which a nozzle of the pot is connected.

### DESCRIPTION OF EMBODIMENTS

Hereinbelow, a cooking device of the invention will be described in detail with reference to embodiments shown in the drawings.

### First Embodiment

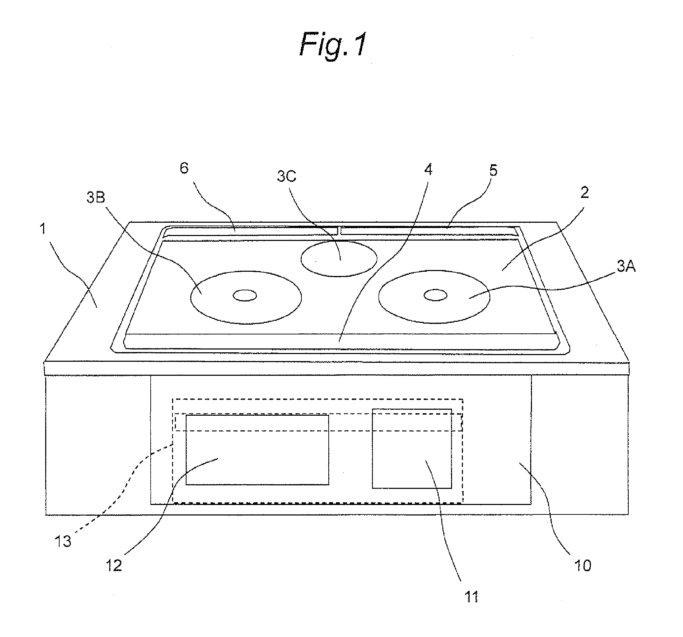

Fig. 1 shows a perspective view of an IH (Induction Heating) cooking heater that is an example of the cooking device in accordance with a first embodiment of the invention, as seen looking diagonally from upper front side. On a top plate 2 provided on a top surface of a cabinet 1 of the IH cooking heater, as shown in Fig. 1, two IH heaters 3A, 3B as an example of the heating device for cooking are provided at a specified interval from each other on a front side thereof, and an electric heater 3C is provided midway between the IH heaters 3A and 3B and on a rear side thereof. An air intake port 5 is provided in generally right half of the rear side of the top plate 2, and an air discharge port 6 is provided in generally left half of the rear side of the top plate 2. A top surface operation part 4 is provided on a front part of the top plate 2. Herein, terms "front" or "front side" refer to a side adjacent to an opening of a heating chamber 12 and terms "rear", or "rear side" refer to a side opposite to the opening of the heating chamber 12.

Provided in the front part of the cabinet 1 are a steam producing unit 11 located on a right side of a front panel 10, and a heating chamber 12 located on a left side of the front panel 10. Provided on the front side of the steam producing unit 11 and the heating chamber 12 is a door 13 with a handle, which door is mounted through a rail unit not shown so as to be slidable in to-and-fro directions. As an opening and closing mechanism for the door 13 with a handle, there may be used an opening and closing mechanism other than slidable type using the rail unit.

Packing (not shown) is attached to periphery of the opening of the heating chamber 12 on the front panel 10, and the periphery of the opening of the heating chamber 12 is sealed with the packing in a state in which the door 13 is closed. In the state in which the door 13 is closed, a clearance for ventilation is provided between the front side of the steam producing unit 11 and the door 13.

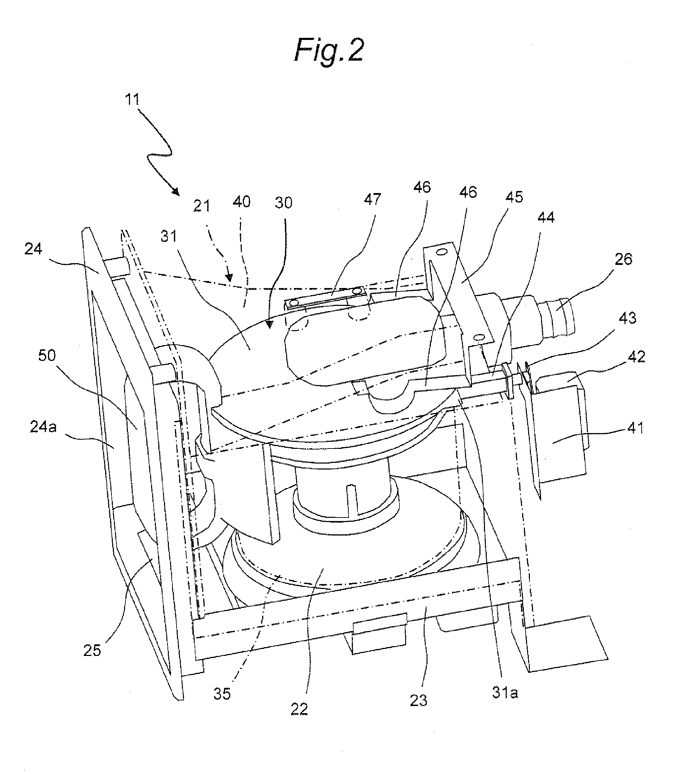

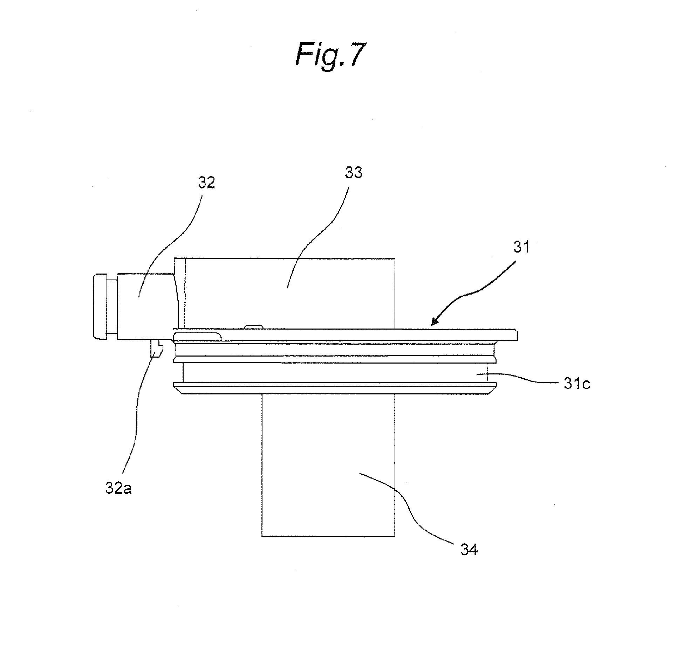

Fig. 2 shows a perspective view of the steam producing unit 11 of the IH cooking heater. As shown in Fig. 2, the steam producing unit 11 includes a pot 30, an upper casing 21 made of heat-resistant resin, a connection part 26 to which a nozzle 32 (shown in Fig. 7) of the pot 30 is connected in a state in which the pot 30 is housed in the upper casing 21, and a heater part 22 for heating the pot 30. The heater part 22 is mounted on a bottom plate 23 made of metal, and a heating portion protrudes from the bottom plate 23 so as to be shaped like a frustum of a cone.

The pot 30 has a top lid 31 made of heat-resistant resin, the steam blow-off nozzle 32 (shown in Fig. 7) which is provided integrally with the top lid 31, a heating container 35 on which the top lid 31 is mounted and which is made of metal, and an annular handle 50 which is mounted on the heating container 35 and which is made of heat-resistant resin.

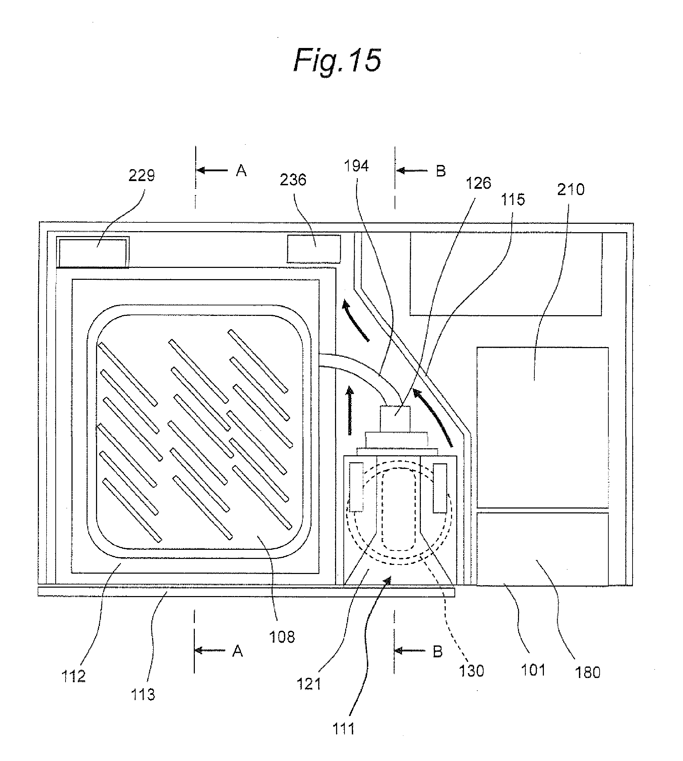

Mounted on a front side of the upper casing 21 is a frame part 24 that defines an insertion opening 24a and that is made of heat-resistant resin. A cooling fan (not shown) for discharging air, taken in from the side of the insertion opening 24a, to rear of the upper casing 21 may be mounted on a rear side of the upper casing 21, whereas a cooling fan (236 shown in Fig. 15) placed on the rear side of the heating chamber may be made to double as the former cooling fan.

The upper casing 21, the bottom plate 23, and the frame part 24 form a housing part for housing the pot 30.

A limit switch 42 as an example of the pot detection part is mounted through a mounting plate 41 on the rear side of the upper casing 21. When an arm 44 is pushed backward by a protrusion 31a provided on the top lid 31 of the pot 30 and a detection lever 43 of the limit switch 42 is pushed by a rear end of the arm 44, it is detected that the pot 30 is housed in the upper casing 21.

When the pot 30 is inserted into the upper casing 21 through the insertion opening 24a, the nozzle 32 (shown in Fig. 7) of the pot 30 is guided in vertical and left-right directions toward a position for connection with the connection part 26 by a guiding part 40 provided on an upper side of the upper casing 21.

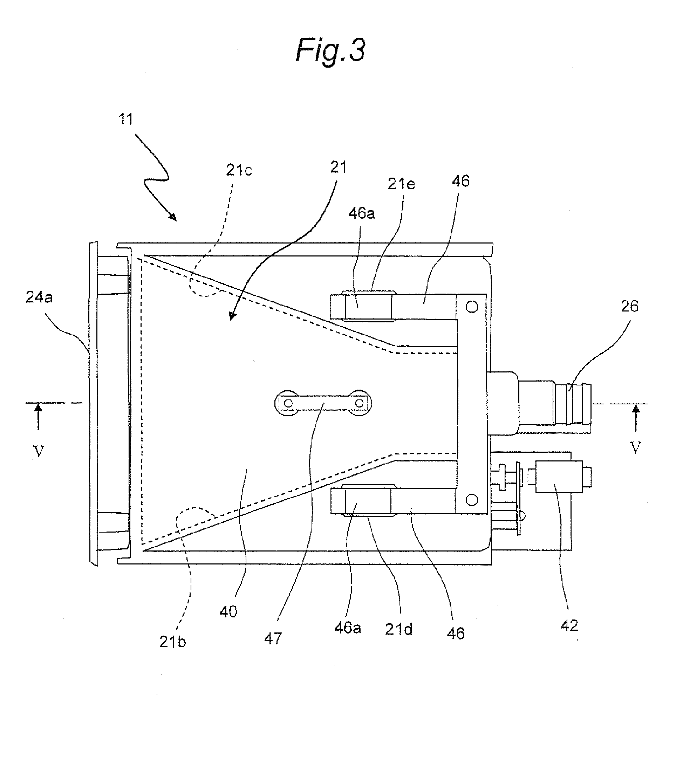

On an upper and rear side of the upper casing 21, a rectangular base 45 for spring plates is mounted so that a longitudinal direction thereof extends along the left-right direction. Spring plates 46, 46 extending forward are provided at both ends of the base 45 for spring plates. Provided near the extremity of the spring plates 46, 46 are curved parts 46a, 46a (shown in Fig. 3) that are curved downward in shape of semi-circular arcs. In the state in which the pot 30 is housed in the upper casing 21, lower ends of the curved parts 46a, 46a of the spring plates 46, 46 are in contact with the top lid 31 of the pot 30 and press the pot 30 downward. Provided on the upper side of the upper casing 21 are generally rectangular openings 21d, 21e (shown in Fig. 3) in which the curved parts 46a, 46a are received.

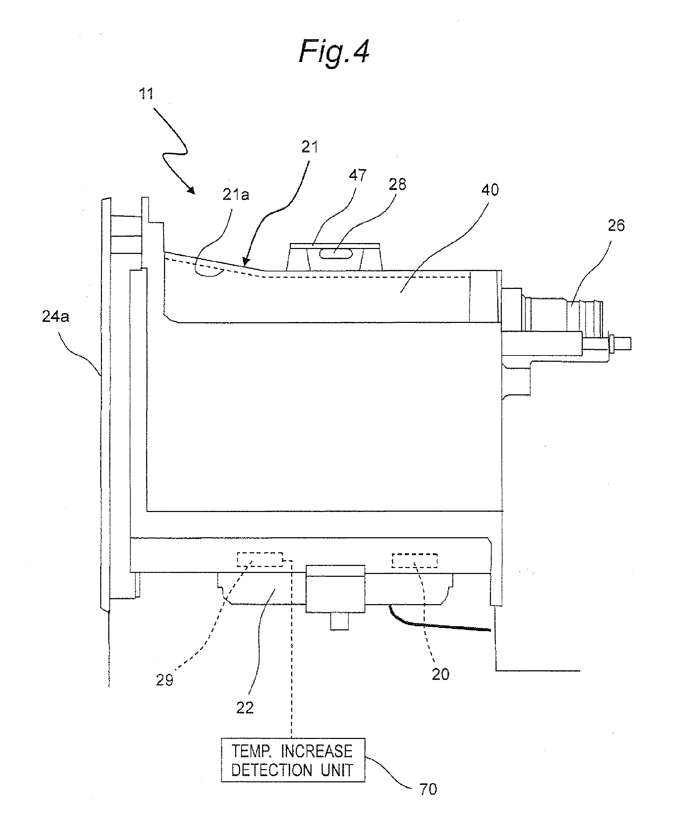

Fig. 3 shows a top plan view of the steam producing unit 11, and Fig. 4 shows a side view of the steam producing unit 11. As shown in Figs. 3 and 4, the guiding part 40 provided by the upper side of the upper casing 21 has an upper tapered surface 21a (shown in Fig. 4) which gradually lowers from a side of the insertion opening 24a toward a side of the connection part 26 and opposed side tapered surfaces 21b, 21c (shown in Fig. 3) which are provided on both sides of the upper tapered surface 21a, with distances between the side tapered surfaces 21b, 21c gradually narrowing toward the side of the connection part 26. As shown in Fig. 4, a heater part temperature sensor 29 for detecting a temperature of the heater part 22 and a thermostat 20 as an example of the energization interrupting part are mounted in vicinity of the heater part 22. On basis of the temperatures of the heater part 22 that are detected by the heater part temperature sensor 29, a quantity of an increase in the temperature of the heater part 22 for a specified term is detected by a temperature increase detection part 70.

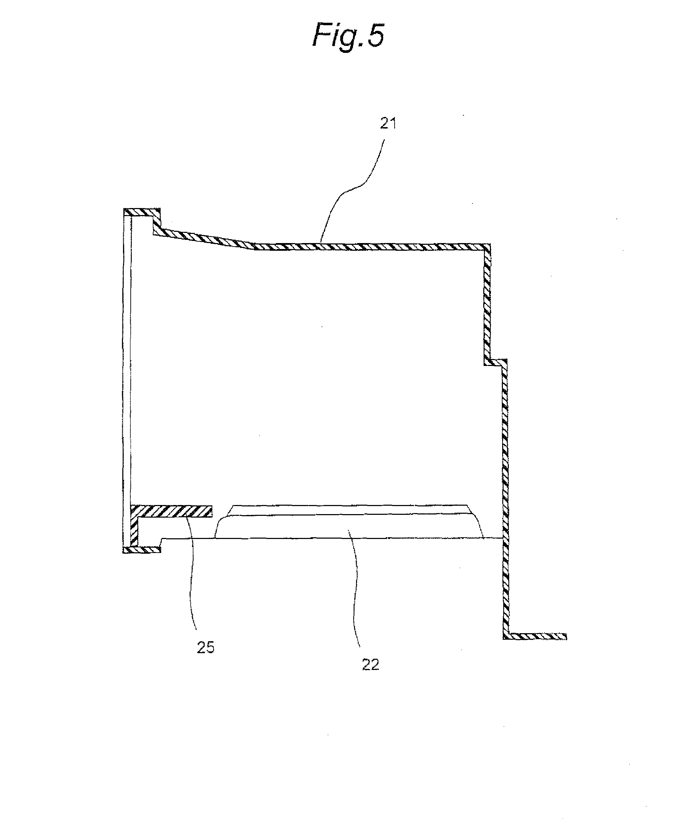

Fig. 5 shows a schematic section taken along line V-V of Fig. 3. The connection part 26 is omitted in Fig. 5.

As shown in Fig. 5, a front plate 25 is provided on a lower side in the insertion opening of the upper casing 21 so as not to be in contact with a metal part that is heated by the heater part 22. As shown in Fig. 5, a top surface of the front plate 25 is positioned so as to be level with a top surface of the heater part 22 in general. Thus absence of difference in level in an insertion path for the pot 30 makes it possible to smoothly insert the pot 30 (shown in Fig. 2) into the upper casing 21.

A shape of the front plate 25 is not limited to the shown one, but the front plate 25 has only to be placed so as not to be in contact with the metal part that is heated by the heater part 22.

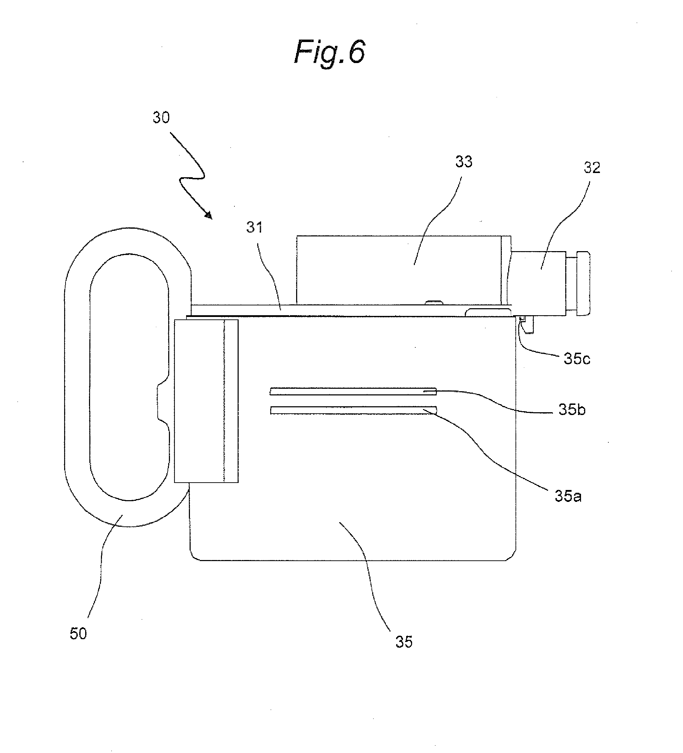

Fig. 6 shows a side view of the pot 30 in a state in which the top lid 31 is mounted on the heating container 35 mounted with the handle 50. On a side surface of the heating container 35 shaped like a cylinder having a bottom, as shown in Fig. 6, a first water level scale mark 35a and a second water level scale mark 35b are provided along a circumferential direction of the heating container 35 and at a specified distance to each other in a vertical direction thereof. During cooking by heat, water is supplied into the heating container 35 so that a level of the water comes to between the first water level scale mark 35a and the second water level scale mark 35b. Provided on an upper surface of the top lid 31 is a nozzle base 33 radially extending in a direction opposite to a position in which the handle 50 is mounted to the heating chamber. The nozzle 32 extends outward from an extremity of the nozzle base 33. The two, i.e., first and second water level scale marks 35a and 35b are provided on the heating container 35 in the embodiment, whereas only one water level scale mark may be provided on the heating container.

As shown in Fig. 6, provision of the handle 50 on a side opposite to a direction in which the extremity of the nozzle 32 of the pot 30 is oriented causes the extremity of the nozzle 32 to be oriented toward depth of the upper casing 21, when the pot 30 is inserted into the upper casing 21 (shown in Fig. 2) with the handle 50 held in hand, and thus facilitates guidance of the nozzle 32 by the guiding part 40 (shown in Fig. 2). At least an upper part of the handle 50 of the pot 30 is higher than a top of the heating container 35, and thus contact of a hand with the heating container 35 is prevented and a burn thereof is impeded when the pot 30 is drawn out of and inserted into the upper casing 21 with the handle 50 held in the hand.

Fig. 7 shows a side view of the top lid 31. As shown in Fig. 7, a circular groove 31c is provided on outer circumference of the disc-like top lid 31 provided with the nozzle base 33 on the upper side thereof. Sealing between the top lid 31 and the heating container 35 is attained by fitting of an O-ring (not shown) in the circular groove 31c. An engagement part 32a is provided on an under side of the nozzle 32. The engagement part 32a of the top lid 31 is engaged with a protrusion 35c on the heating container 35 shown in Fig. 6.

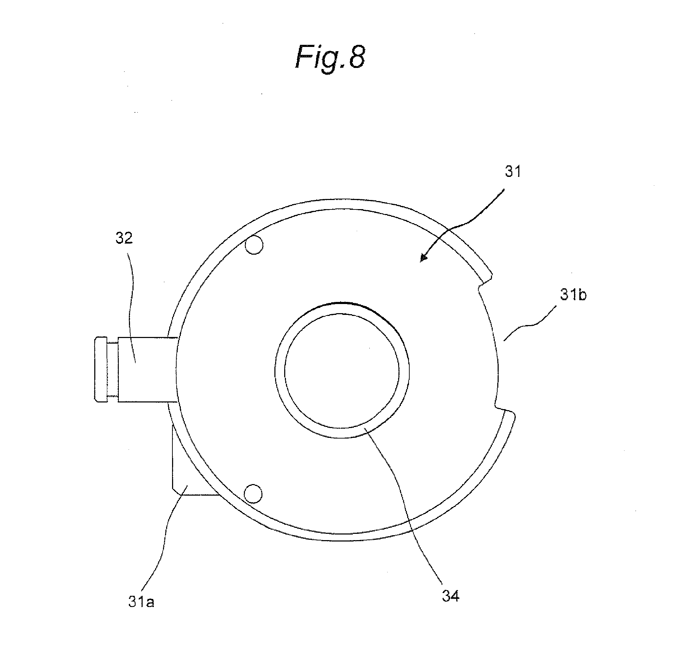

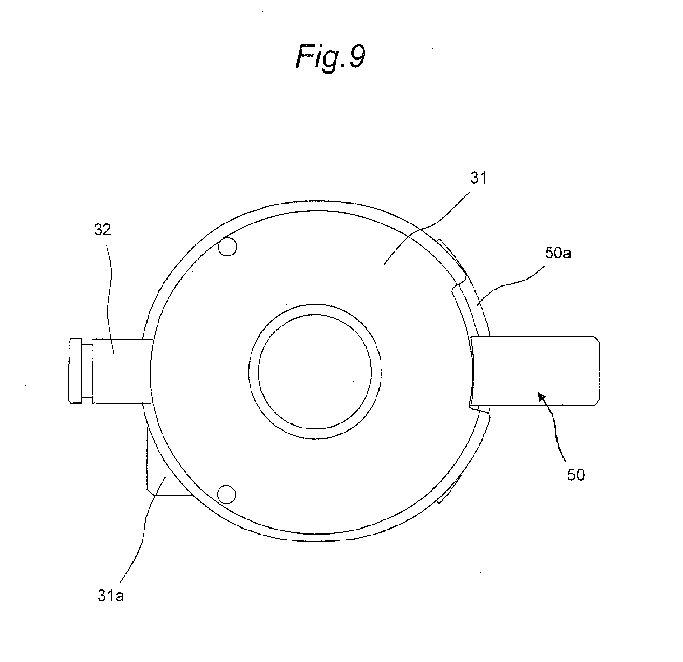

Fig. 8 shows a bottom plan view of the top lid 31, and a cylindrical float housing part 34 extends downward from a central part of a lower side of the top lid 31 (see Fig. 7). A protruding part 31a is provided on the outer circumference of the top lid 31 in vicinity of the nozzle 32, and a cutout 31b is provided opposite to the nozzle 32 on the top lid 31 so as to prevent interference with the handle 50. A base part 50a of the handle 50 mounted on the heating container 35 is placed in a position of the cutout 31b (see Fig. 9).

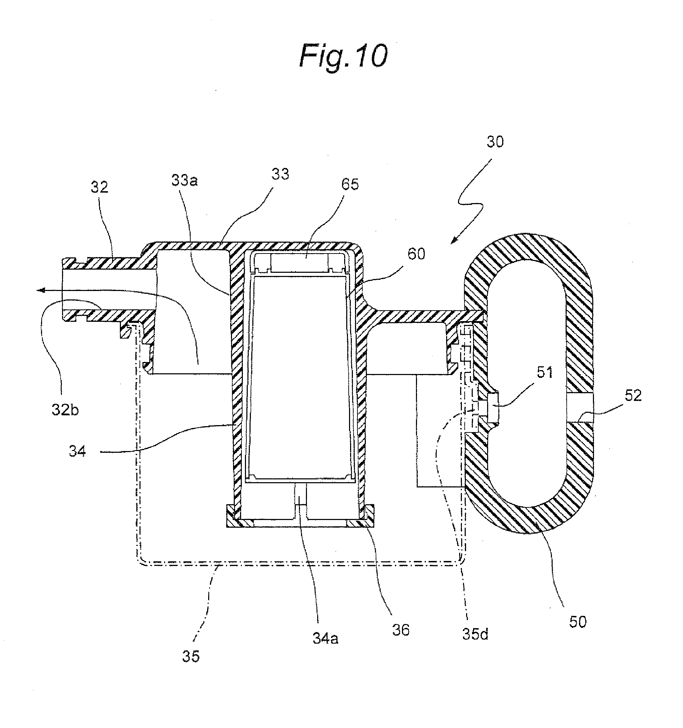

Fig. 10 shows a vertical section of the pot 30. As shown in Fig. 10, a steam path 32b in the nozzle 32 communicates with a space in the heating container 35 through a path 33a provided in the nozzle base 33. A hollow float 60 is placed in the float housing part 34 so as to be vertically movable. A magnet 65 is embedded in an upper part of the float 60. An annular stopper 36 is mounted on a lower end of the float housing part 34 so as to prevent the float 60 from popping out of the float housing part 34.

The handle 50 is fixed to the heating container 35 by insertion of a screw (not shown) into a fixation hole 51 provided on a side of the annular handle 50 that faces the heating container 35 and by screwing thereof into a screw hole 35d on the heating container 35. In this operation of fastening of the screw, an extremity of a screwdriver is passed through a through hole 52 provided opposite to the fixation hole 51 in the handle 50.

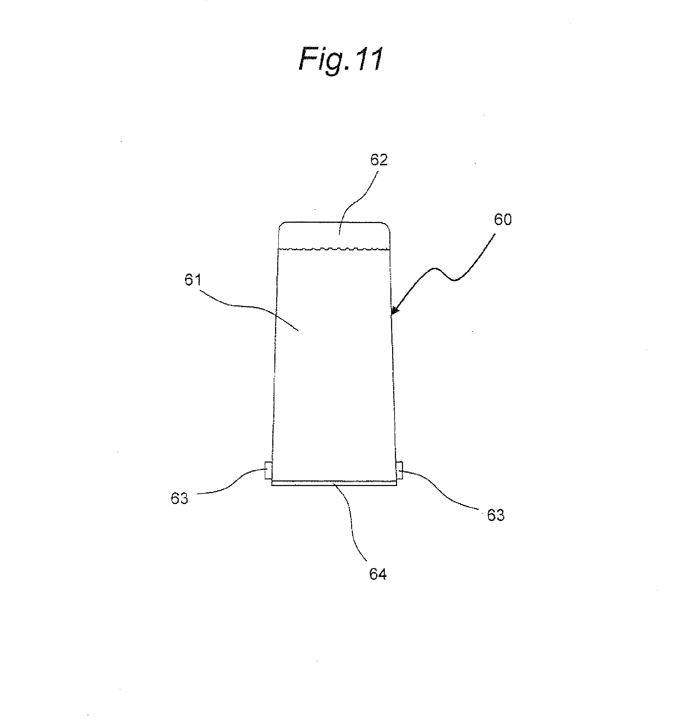

Fig. 11 shows a side view of the float 60 embedded in the float housing part 34 of the top lid 31, and the float 60 has a hollow float body 61 that is shaped like a frustum of a cone of which diameters on upper side are slightly smaller than those on lower side thereof, a magnet housing part 62 provided on upper side of the float body 61, and a lid 64 for closing underside of the float body 61. Protruding parts 63, 63 protruding outward are provided on two sites that are on the lower side of the float body 61 and that are opposed to each other in a radial direction. The protruding parts 63, 63 are vertically guided by slits 34a provided in the float housing part 34 shown in Fig. 10.

Once a specified quantity of water is supplied into the heating container 35 in the pot 30 having the above-described configuration, the float 60 floats up in the float housing part 34, and an upper end of the float 60 comes into contact with a portion of the nozzle base 33 of the top lid 31. When the pot 30 is inserted into the upper casing 21 in this state, a reed switch 28 as an example of the water detection part mounted on a reed switch mounting plate 47 shown in Fig. 4 is turned on by a magnetic force of the magnet 65 in the float 60. Thus presence of the specified quantity of water in the pot 30 can be detected.

In the IH cooking heater having the above configuration, the pot 30 containing the required quantity of water is housed in the housing part (21, 23, 24) with the handle 50 held in hand, and the water in the pot 30 is thereafter boiled by heating of the pot 30 by the heater part 22. Then steam produced in the pot 30 is supplied to the heating chamber 12 (shown in Fig. 3) through the nozzle 32 and the connection part 26. In the heating chamber 12, food is heated to be cooked by the steam supplied from the pot 30 and by a heat source such as a sheathed heater.

As is apparent, the pot 30 can easily be inserted into the housing part (21, 23, 24) and can reliably be housed in the housing part (21, 23, 24), even if the housing part (21, 23, 24) is below eye level, so that heating of the pot 30 emptied by inclination of the pot 30 or the like can be prevented. Bedsides, there is no fear of a burn of a hand or the like because the pot 30 is inserted into and drawn out of the housing part (21, 23, 24) with the handle 50 of the pot 30 held in the hand. As a result, operability and safety can be improved in the IH cooking heater from which the pot 30 of the steam producing unit 11 can be detached.

In the steam producing unit 11, the nozzle of the pot 30 inserted from the insertion opening 24a is guided with respect to the vertical direction by the upper tapered surface 21a of the guiding part 40 that gradually lowers from the side of the insertion opening 24a toward the side of the connection part 26, and the nozzle 32 of the pot 30 is guided with respect to the left-right direction by both the side tapered surfaces 21b, 21c of the guiding part 40 in which the distances therebetween gradually narrow toward the side of the connection part 26, so that the nozzle 32 of the pot 30 can easily be guided toward the position for connection to the connection part 26. In addition, positioning the nozzle 32 of the pot 30 relative to the connection part 26 results in determination of a relative positional relation between the pot 30 and the heater part 22 and thus makes it possible to reliably place the pot 30 in the housing part (21, 23, 24).

The connection part 26 is provided so as to be capable of vertically moving and following the nozzle 32 of the pot 30 to be housed in the housing part (21, 23, 24). Thus, reliable connection can be attained with the connection part 26 following the position of the nozzle, even if the position for connection of the nozzle of the pot 30 with the connection part 26 deviates because of variation in manufacture.

The front plate 25 is provided on the lower side in the insertion opening 24a of the housing part (21, 23, 24) so as not to be in contact with the metal part that is heated by the heater part 22, and thus a burn of a hand or the like can reliably be prevented, when the pot 30 is drawn and inserted.

On condition that the pot 30 is not housed in the housing part (21, 23, 24) or that the pot 30 is not housed in a right position in the housing part (21, 23, 24) because of inclination of the pot 30 or the like, energization of the heater part 22 can be stopped by the limit switch 42 detecting whether the pot 30 has been housed or not in the housing part (21, 23, 24), so that safety can be improved.

By the reed switch 28 detecting whether the water level in the pot 30 is above a predetermined water level or not, presence of an amount of water required for cooking can be checked and heating of the pot having run out of water in middle of cooking can be prevented. Besides, heating of the pot 30 containing no water from beginning can be prevented.

The quantity of an increase in the temperature of the heater part 22 in the predetermined period is detected by the temperature increase detection unit 70 on basis of the temperatures of the heater part 22 that are detected by the heater part temperature sensor 29 (shown in Fig. 4), and thus it can be determined whether an adequate quantity of water is in the pot 30, whether an overall bottom part of the pot 30 is in contact with the heater part 22 or the like on basis of the quantity of the increase in the temperature of the heater part 22 when the temperature of water in the pot 30 is increased by heating of the pot 30 by the heater part 22. On condition that there is a gap between the bottom part of the pot 30 and the heater part 22 because of inclination of the pot 30 that is not correctly housed in the housing part, foreign matter that is caught between the bottom part of the pot 30 and the heater part 22, or the like, for instance, heat of the heater part 22 is not sufficiently conducted to the pot 30 and the quantity of an increase in the temperature of the heater part 22 becomes larger than that in normal heating.

The energization of the heater part 22 can be interrupted by the thermostat 20 (shown in Fig. 4) in case that the heater part 22 is abnormally overheated by heating of the empty pot 30, for instance, and thus safety is improved.

Air taken in from the insertion opening 24a of the housing part (21, 23, 24) is discharged by the cooling fan from the air discharge port 6 in rear of the housing part (21, 23, 24) through a ventilation path to outside, thus air in the housing part (21, 23, 24) is inhibited from having a high temperature while the pot 30 is being heated by the heater part 22, and hot air is prevented from blowing frontward out of the insertion opening 24a of the housing part (21, 23, 24) and from causing a burn of a person. In addition, members of the housing part (21, 23, 24) and members surrounding the housing part, excluding the pot 30 and the heater part 22 can be inhibited from having high temperatures when the pot 30 is heated by the heater part 22.

Though the IH cooking heater has been described as the cooking device for the first embodiment, the cooking device is not limited thereto and the invention may be applied to cooking devices such as microwave oven.

The guiding part 40 is provided on the upper side of the upper casing 21 so as to be integral therewith in the first embodiment, whereas there may be provided a guiding part separate from the housing part.

The nozzle 32 of the pot 30 is guided by the guiding part 40 that has the upper tapered surface 21a provided on the upper side of the guiding part 40 and the both side tapered surfaces 21b, 21c in the first embodiment, whereas the guiding part is not limited thereto but has only to guide the nozzle of the pot with respect to the vertical direction and the left-right direction toward the position for connection to the connecting part when the pot is inserted from the insertion opening into the containing part.

The connection part 26 is provided so as to be movable in the vertical direction in the first embodiment, whereas the connection part may be movable not only in the vertical direction but also in the left-right direction and/or may be provided so as to be capable of fluctuating or swinging to follow the nozzle of the pot to be housed in the housing part.

The steam producing unit 11 is placed in the cabinet 1 so that the insertion opening of the housing part (21, 23, 24) of the steam producing unit 11 faces forward. Also, the heating chamber 12 is placed on a lateral side of the steam producing unit 11 in the cabinet 1 so that the opening of the heating chamber 12 faces forward. Thus, the steam producing unit 11 and the heating chamber 12 are arranged along a lateral direction on the front side of the cabinet 1, the upper surface of the cabinet 1 can be made flat so that cooktops and the like can be provided thereon, and a height of the cabinet 1 can be decreased so as to be easily suited to a built-in kitchen of JIS (Japanese Industrial Standards) under a restriction on a height thereof and the like.

The cooking device suited to a domestic built-in kitchen can be obtained by placement of the housing part of the steam producing unit 11 and the heating chamber 12 on the front side in the cabinet 1 and by placement of the heating devices (3A, 3B) for cooking on the top face side of the cabinet 1.

By simultaneous opening and closure of the insertion opening of the housing part of the steam producing unit 11 and the opening of the heating chamber 12 by the single door 13 with a handle provided on the front side of the cabinet 1, a number of components of the IH cooking heater can be reduced and also safety is improved because a number of times of unnecessary draws of the pot 30 from the housing part is reduced in cooking with use of the heating chamber 12.

### Second Embodiment

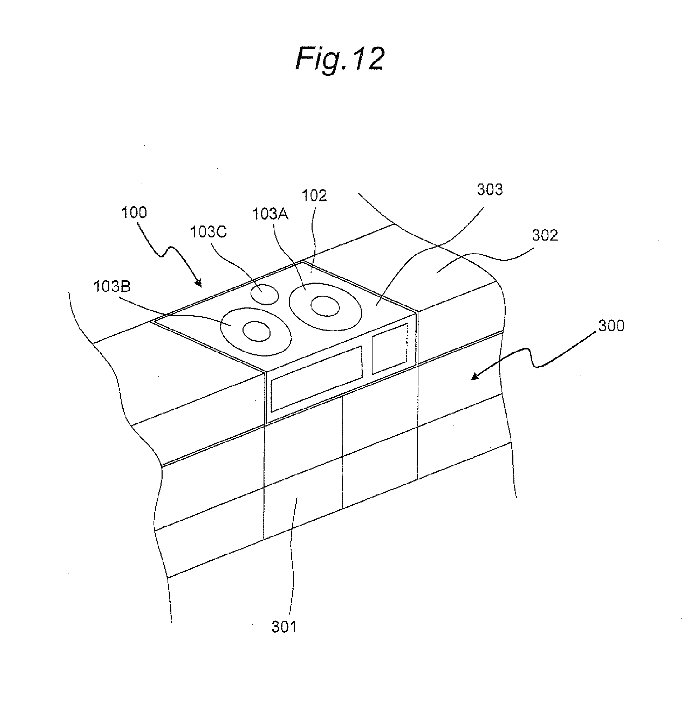

Fig. 12 shows a perspective view of a built-in kitchen in which an IH cooking heater as an example of the cooking device in accordance with a second embodiment of the invention is integrated.

In the built-in kitchen 300, as shown in Fig. 12, top plates 302 are provided in areas except a recessed part 303 for cooking equipment on an upper side of a cabinet 301, and the IH cooking heater 100 is placed in the recessed part 303 for cooking equipment. Provided on a top plate 102 of the IH cooking heater 100 are a right IH heater 103A, a left IH heater 103B and a center IH heater 103C as an example of the heating device for cooking.

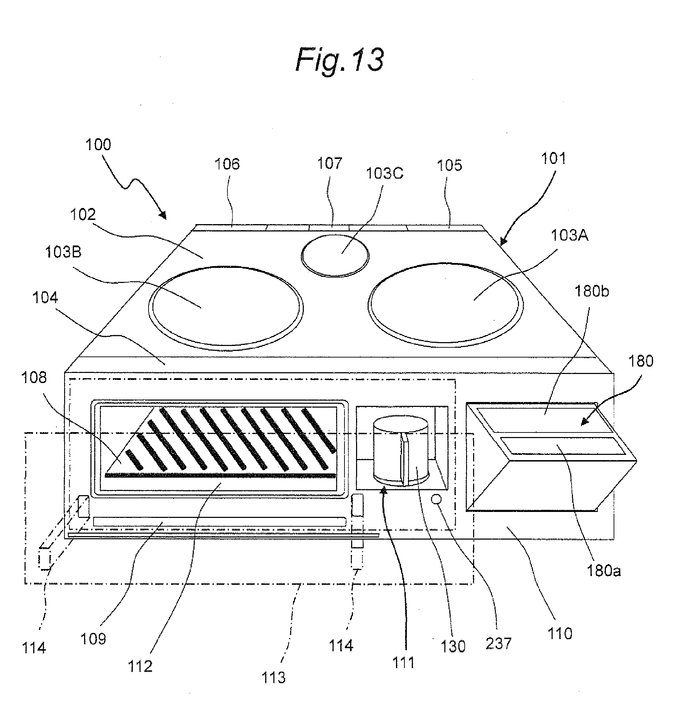

Fig. 13 shows a perspective view of the IH cooking heater 100 as seen looking diagonally from upper front side. On a top plate 102 provided on a top surface of a casing 101 of the IH cooking heater 100, as shown in Fig. 13, the two IH heaters, i.e., the right IH heater 103A and the left IH heater 103B are provided at a specified distance from each other on a front side thereof and the center IH heater 103C is provided midway between the right IH heater 103A and the left IH heater 103B and on a rear side thereof. An air intake port 105 is provided on a rear right side of the top plate 102, and an air discharge port 106 is provided on a rear left side of the top plate 102. An air discharge port 107 is provided at center in general on the rear side of the top plate 102. A top surface operation part 104 is provided on the front side of the top plate 102. Herein, terms "front" or "front side" refer to a side adjacent to an opening of a heating chamber 112 and terms "rear" or "rear side" refer to a side opposite to the opening of the heating chamber 112.

A steam producing unit 111 that includes a pot 130 is provided in the casing 101 in a generally center position (slightly to the right side) of a front panel 110, and the heating chamber 112 that houses a tray 108 is provided in a position on a left side of the front panel 110. A drawer-type front operation panel 180 having an operation part 180a and a display part 180b is provided on the right side of the front panel 110. The front operation panel 180 is for operation of the heating chamber 112 and is supported so as to be pivotable in a to-and-fro direction on a lower end of the front operation panel 180. The front operation panel 180 is accommodated in the casing 101 when the heating chamber 112 is not in use.

Provided on the front side of the steam producing unit 111 and the heating chamber 112 is a door 113 with handle, as an example of the door, which is mounted through a rail unit 114, 114 so as to be slidable in the to-and-fro directions. As an opening and closing mechanism for the door 113 with handle, there may be used an opening and closing mechanism other than slidable type using the rail unit.

Packing (not shown) is attached to periphery of the opening of the heating chamber 112 on the front panel 110, and the periphery of the opening of the heating chamber 112 is sealed with the packing in a state in which the door 113 is closed. In the state in which the door 113 is closed, a clearance for ventilation is provided between the front side of the steam producing unit 111 and the door 113. Ventilation paths for supplying air from the front side to the steam producing unit 111 may be provided on the door 113 with handle.

An air intake port 109 that has the same length along a longitudinal direction as the heating chamber 112 has is provided under the opening of the heating chamber 112 on the front panel 110. Air taken in from the front side through air paths (not shown) in the door 113 with handle and through the air intake port 109 cools a whole lower side of the heating chamber 112 and is thereafter discharged through the air discharge port 106.

A high-temperature caution lamp 237 is provided adjacent to and under the steam producing unit 111 on the front panel 110.

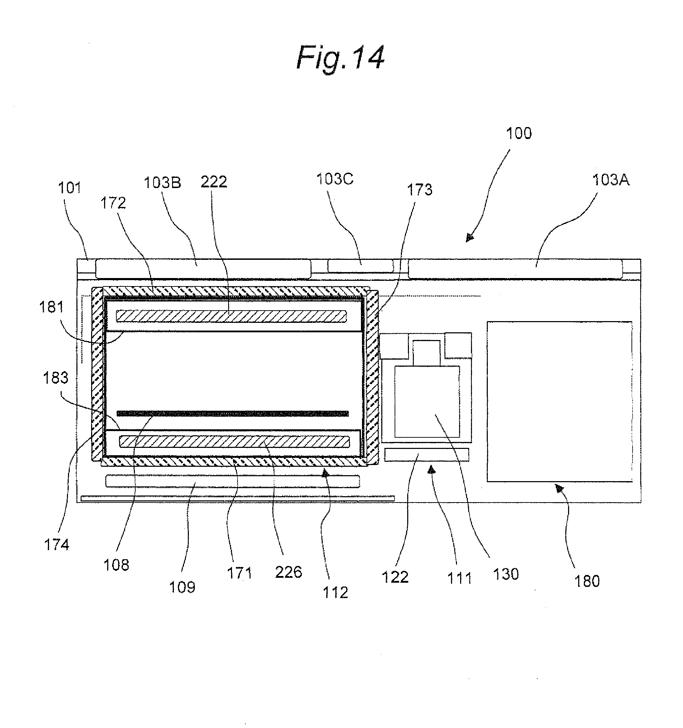

Fig. 14 shows a schematic section of the IH cooking heater 100 as seen looking from the front side. In Fig. 14, the same components as those in Fig. 13 are provided with the same reference numerals.

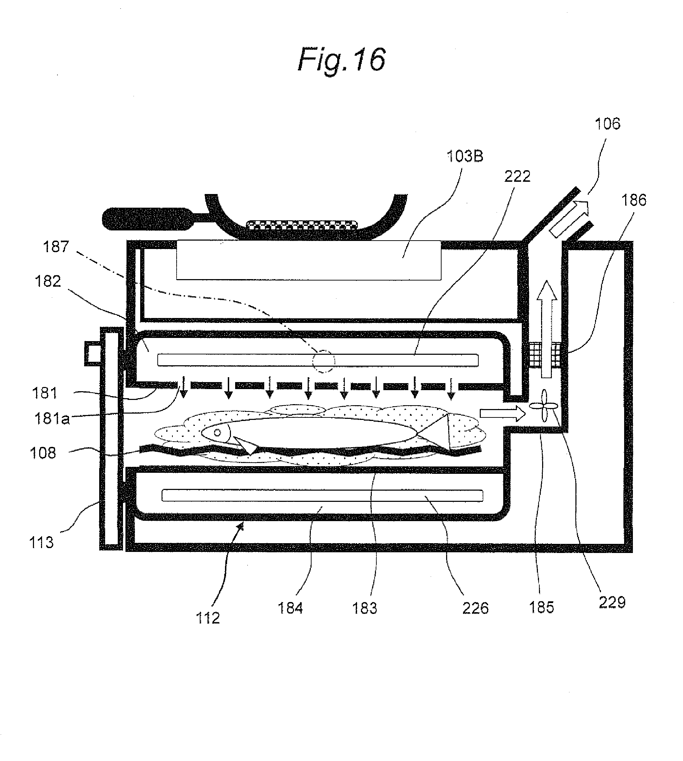

In the heating chamber 112 provided generally in a left half of the casing 101, as shown in Fig. 14, the periphery thereof except the opening thereof is covered with a lower heat insulator 171, an upper heat insulator 172, a right heat insulator 173, a left heat insulator 174, and a rear heat insulator (not shown). An upper heater 222 is provided in an upper part of the heating chamber 112, and an underside of the upper heater 222 is covered with an upper cover 181 having a plurality of steam blow-off holes (181a in Fig. 16). A lower heater 226 is provided in a lower part of the heating chamber 112, and an upper side of the lower heater 226 is covered with a lower cover 183.

A heater part 122 for heating a bottom part of the pot 130 is installed in the steam producing unit 111 which is on the right side of the heating chamber 112. The steam producing unit 111 has generally the same configuration as the steam producing unit 11 of the first embodiment, except for spring plates, a connection part, and a pot.

Fig. 15 shows a schematic diagram illustrating an internal structure in the casing 101 of the IH cooking heater 100 as seen looking from above. As shown in Fig. 15, the tray 108 is housed in the heating chamber 112, and the pot 130 is housed in an upper casing 121 of the steam producing unit 111 that is on the right side of the heating chamber 112. Provided on the rear side of the upper casing 121 is a connection part 126 to which a nozzle (not shown) of the pot 130 is to be connected. One of two ends of a steam supply pipe 194 is connected to the connection part 126, and the other end of the steam supply pipe 194 is connected to the heating chamber 112.

The front operation panel 180 is provided on the front side of the casing and on the right side of the steam producing unit 111, and a driving circuit block 210 is provided on the rear side of the front operation panel 180. The driving circuit block 210 drives the right IH heater 103A, the left IH heater 103B and the center IH heater 103C shown in Fig. 14. Inside of the casing 101 is divided by a partition 115 into a left space including the heating chamber 112 and the steam producing unit 111 and a right space including the front operation panel 180 and the driving circuit block 210.

An exhaust fan 229 for the heating chamber 112 is provided on the rear side of and in vicinity of a left corner of the heating chamber 112. A cooling fan 236 for the steam producing unit 111 is provided on a rear right side of the heating chamber 112. By the cooling fan 236, air taken in from the front side of the steam producing unit 111 is discharged from the air discharge port 107 (shown in Fig. 13) through a ventilation path to outside. There may be a plurality of exhaust fans for the heating chamber and/or there may be a plurality of cooling fans for discharging air, taken in from the front side of the steam producing unit, through the ventilation path to outside.

Fig. 16 shows a schematic section taken along line A-A of Fig. 15. In Fig. 16, the same components as those in Fig. 13 are provided with the same reference numerals.

As shown in Fig. 16, the upper cover 181 provided with the plurality of steam blow-off holes 181a covers the upper heater 222 provided on the upper side in the heating chamber 112, thus defining an upper heater housing part 182. The lower cover 183 covers the lower heater 226 provided on the lower side in the heating chamber 112, thus defining a lower heater housing part 184. The one end of the steam supply pipe 194 (shown in Fig. 15) is connected to a steam supply opening 187 provided on a right lateral side (i.e., an upper side in a direction perpendicular to a paper sheet of Fig. 16) of the upper heater housing part 182.

One of two ends of an air discharge duct 185 is connected to a back face side of a chamber space defined between the upper heater housing part 182 and the lower heater housing part 184 of the heating chamber 112, and the other end of the air discharge duct 185 is connected to the air discharge port 106. An exhaust fan 229 is provided in the air discharge duct 185 near the heating chamber 112, and catalyst 186 for smoke removal and deodorization is placed downstream of the exhaust fan 229. The catalyst 186 for smoke removal and deodorization is nickel alloy, ceramic or the like to which platinum or palladium has been added.
As shown in Fig. 16, food placed on the tray 108 in the heating chamber 112 is heated to be cooked by radiant heat from the upper cover 181, radiant heat from the lower cover 183, and superheated steam that is blown through the plurality of steam blow-off holes 181a and that has temperatures of higher than 100°C. Then the superheated steam supplied to and deposited on surfaces of the food condenses on the surfaces of the food and gives the food a great quantity of latent heat of condensation and therefore heat can efficiently be transmitted to the food.

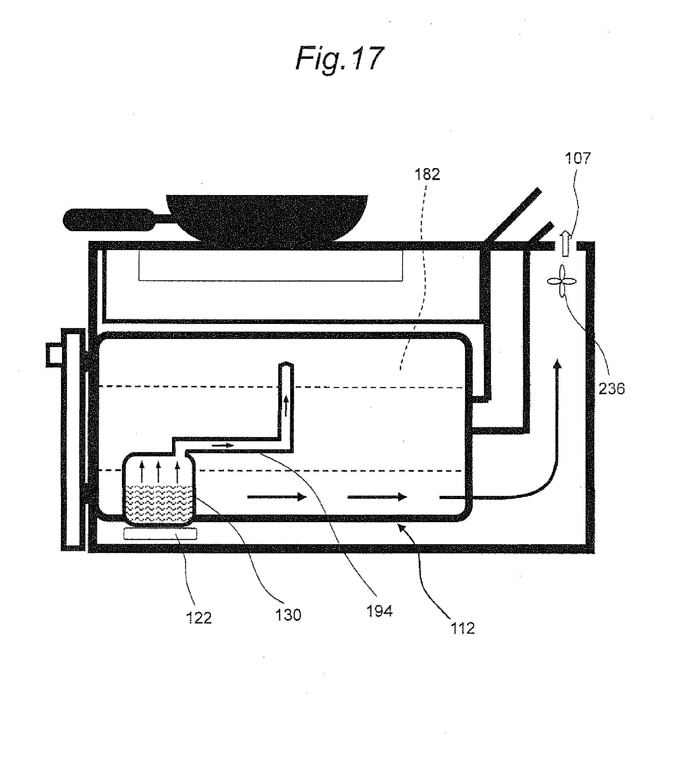

Fig. 17 shows a schematic section taken along line B-B of Fig. 15. As shown in Fig. 17, the bottom part of the pot 130 is heated by the heater part 122 provided on a lateral side of the heating chamber 112. Steam produced from water in the pot 130 that is boiled by heating by the heater part 122 is supplied through the steam supply pipe 194 into the upper heater housing part 182 in the heating chamber 112. The steam supplied into the upper heater housing part 182 is further heated by the upper heater 222 (shown in Fig. 16) to become superheated steam, which is then supplied through the steam blow-off holes 181a of the upper cover 181 shown in Fig. 16 into the chamber. The term "superheated steam" used herein refers to steam heated to a superheated state with temperatures of higher than 100°C.

By the cooling fan 236, air taken in from the front side of the steam producing unit 111 (shown in Fig. 15) including the heater part 122 and the pot 130 is discharged from the air discharge port 107 through the ventilation path to outside.

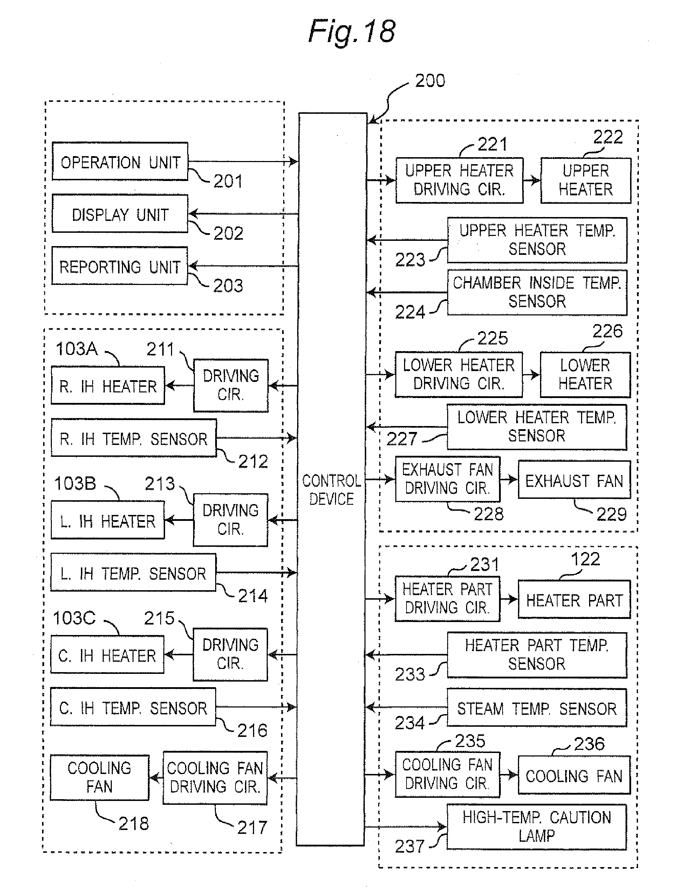

Fig. 18 shows a control block diagram for the IH cooking heater 100. The IH cooking heater 100 has a control device 200 composed of a microcomputer, input/output circuits and the like. The control device 200 receives input signals from an operation unit 201 and controls a display unit 202 and a reporting unit 203. The operation unit 201 includes the top surface operation part 104, the operation part 180a of the front operation panel 180 and the like that are shown in Fig. 13, and the display unit 202 includes a display part of the top surface operation part 104, the display part 180b of the front operation panel 180, and the like. The reporting unit 203 informs a user of contents of operations, alarms, and the like by voice.

The IH cooking heater 100 has a right IH temperature sensor 212 for detecting a temperature of the right IH heater 103A, a left IH temperature sensor 214 for detecting a temperature of the left IH heater 103B, and a center IH temperature sensor 216 for detecting a temperature of the center IH heater 103C. The control device 200 controls a driving circuit 211 on basis of the temperature detected by the right IH temperature sensor 212 so that the driving circuit 211 drives the right IH heater 103A. The control device 200 controls a driving circuit 213 on basis of the temperature detected by the left IH temperature sensor 214 so that the driving circuit 213 drives the left IH heater 103B. The control device 200 controls a driving circuit 215 on basis of the temperature detected by the center IH temperature sensor 216 so that the driving circuit 215 drives the center IH heater 103C. The control device 200 controls a cooling fan driving circuit 217 to drive the cooling fan 218 for cooling the right IH heater 103A, the left IH heater 103B, the center IH heater 103C, and the driving circuits 211, 213, 215. There may be a plurality of cooling fans for cooling the IH heaters and driving units.

The IH cooking heater 100 has an upper heater temperature sensor 223 for detecting a temperature of atmosphere in the upper heater housing part 182 (shown in Fig. 16), a lower heater temperature sensor 227 for detecting a temperature of atmosphere in the lower heater housing part 184 (shown in Fig. 16), and a chamber inside temperature sensor 224 for detecting a chamber inside temperature in the heating chamber 112 (shown in Fig. 16). On basis of the temperature detected by the upper heater temperature sensor 223, the temperature detected by the lower heater temperature sensor 227, and the temperature detected by the chamber inside temperature sensor 224, the control device 200 controls an upper heater driving circuit 221 and a lower heater driving circuit 225 to drive the upper heater 222 and the lower heater 226, respectively. The control device 200 controls an exhaust fan driving circuit 228 and thereby drives the exhaust fan 229.

The IH cooking heater 100 further has a heater part temperature sensor 233 for detecting a temperature of the heater part 122, and a steam temperature sensor 234 for detecting a temperature in a steam path including the connection part 126 (shown in Fig. 15) and the steam supply pipe 194 (shown in Fig. 15). On basis of the temperature detected by the heater part temperature sensor 233 and the temperature detected by the steam temperature sensor 234, the control device 200 controls a heater part driving circuit 231 and thereby causes the heater part 122 to heat the pot 130 (shown in Fig. 17). The control device 200 controls the cooling fan driving circuit 235 to drive the cooling fan 236.

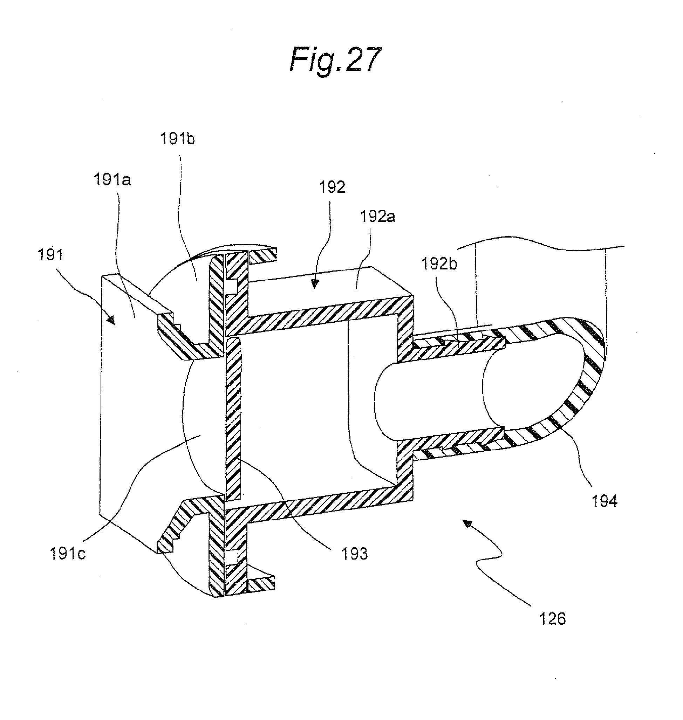

The heater part temperature sensor 233 is placed in a position similar to that of the heater part temperature sensor 29 of the first embodiment shown in Fig. 4. The steam temperature sensor 234 is placed in a connection part body 192 shown in Fig. 27.

The control device 200 turns on and off a high-temperature caution lamp 237 on basis of the temperature detected by the heater part temperature sensor 233. When the temperature detected by the heater part temperature sensor 233 is not lower than a specified temperature, the high-temperature caution lamp 237 is turned on by the control device 200, and thus a user can be informed that components of the steam producing unit 111 have high temperatures. In this way, a burn on the user can be prevented.

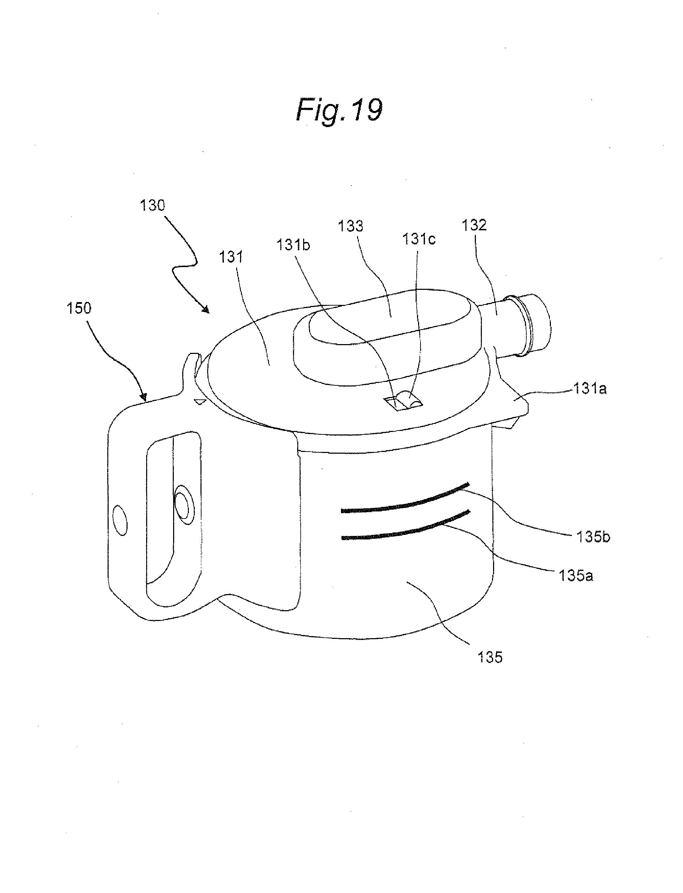

Fig. 19 shows a perspective view of the pot 130. The pot 130 has the same configuration as the pot 30 of the first embodiment shown in Figs. 6 through 11, except for a handle 150 and a top lid 131.

As shown in Fig. 19, the pot 130 has the top lid 131 made of heat-resistant resin, a heating container 135 that is mounted with the top lid 131, that is shaped like a cylinder having a bottom, and that is made of metal, and the annular handle 150 that is mounted on the heating container 135 and that is made of heat-resistant resin. Provided on an upper surface of the top lid 131 is a nozzle base 133 radially extending in a direction opposite to a position in which the handle 150 is mounted to the heating chamber. A steam blow-off nozzle 132 extends outward from an extremity of the nozzle base 133. The top lid 131, the nozzle base 133 and the nozzle 132 are integrally molded from heat-resistant resin.

On the upper surface of the top lid 131, two recessed parts 131b (only one is shown in Fig. 19) are provided in positions symmetrical with respect to a center line passing the handle 150 and the nozzle 132, and protruding parts 131c are provided in vicinity of the recessed parts 131b and on a side confronting the nozzle 132. The detection lever (same as the lever 43 shown in Fig. 2) of the limit switch (same as the switch 42 shown in Fig. 2) is pushed by a protruding part 131a of the top lid 131 of the pot 130.

On a side surface of the heating container 135, a first water level scale mark 135a and a second water level scale mark 135b are provided along a circumferential direction of the heating container 135 at a specified distance to each other in a vertical direction thereof. Two, i.e., first and second water level scale marks 135a and 135b are provided on the heating container 135 in this embodiment, whereas only one water level scale mark may be provided on the heating container.

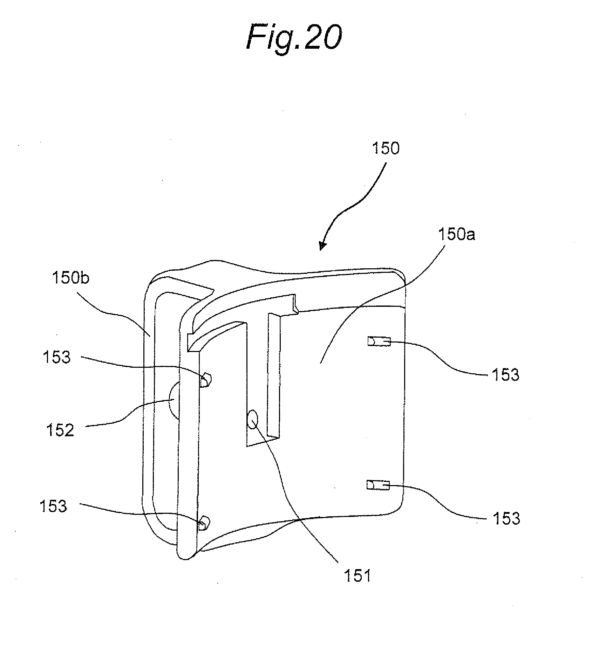

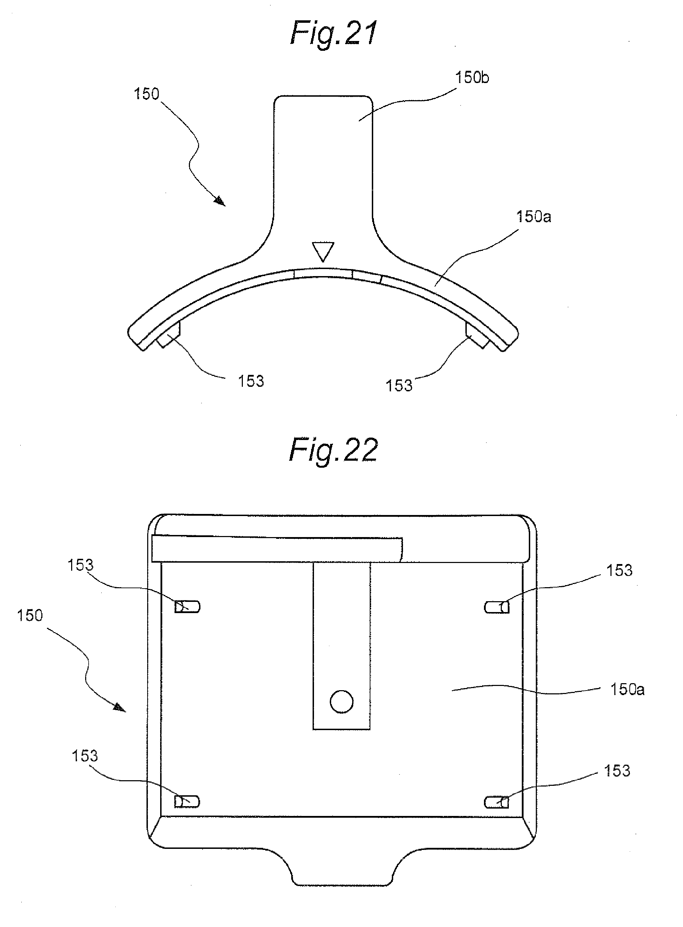

Fig. 20 shows a perspective view of the handle 150 of the pot 130, Fig. 21 shows a top plan view of the handle 150, and Fig. 22 shows a front view of the handle 150. In Fig. 20, reference numeral 151 denotes a hole for fixation and numeral 152 denotes a through hole in which a screw is inserted.

As shown in Figs. 20, 21, and 22, the handle 150 has a handle base 150a that has a shape curved along a cylindrical surface on outer circumference of the heating container 135 (shown in Fig. 19) and a handle annular part 150b that is integrally formed with the handle base 150a. Ribs 153 as an example of the protrusions are provided in vicinity of four corners on a surface of the handle base 150a that faces the heating container 135.

The handle 150 is mounted on the heating container 135, in a state in which the handle 150 and the heating container 135 are in line contact with each other through the plurality of ribs 153 provided on the surface of the handle base 150a of the pot 130 that faces the heating container 135, thus transfer of heat of the heating container 135 to the handle 150 is impeded and the handle 150 is prevented from having high temperatures, so that the pot 130 can more safely be detached and attached, and so that fusion of the handle 150 can be prevented when heating of the empty pot is prolonged on condition that the handle 150 is molded from resin.

The ribs 153 are provided on the surface of the handle base 150a of the pot 130 that faces the heating container 135 in the second embodiment, whereas a plurality of protrusions may be provided on the surface that faces the heating container of the pot so that the handle and the heating container are in point contact with each other.

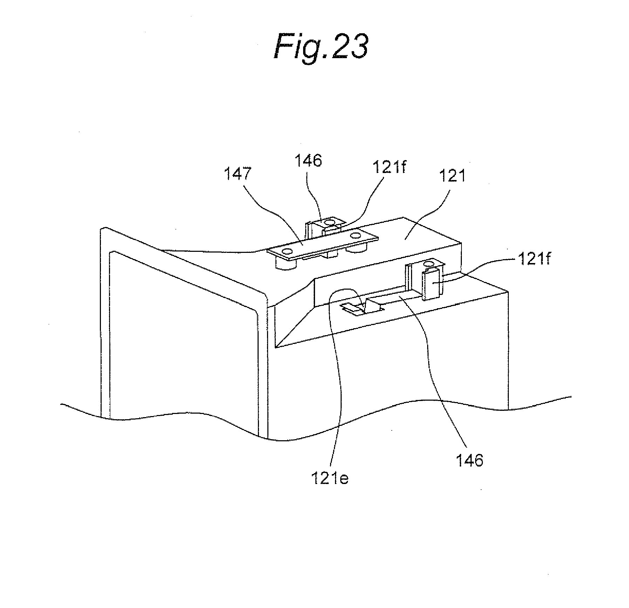

Fig. 23 shows a perspective view of an important part of a housing part for housing the pot 130 shown in Fig. 19. The housing part of the second embodiment has the same configuration as the housing part (the upper casing 21, the bottom plate 23, and the frame part 24) of the first embodiment shown in Fig. 2, except for the upper casing 121. Differences in comparison with the first embodiment are spring plates 146, 146 as an example of the spring members that are provided on the upper casing 121 and a larger reed switch mounting plate 147.

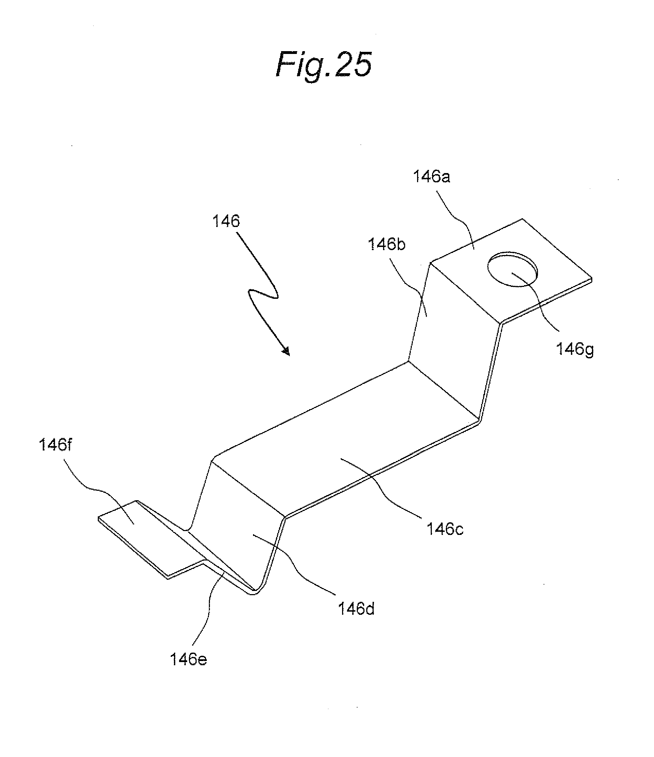

As shown in Fig. 23, the spring plates 146, 146 are mounted on fixation parts 121f, 121f built on upper and rear side on the upper casing 121. Provided near the extremity of the spring plates 146, 146 are V-shaped bent parts (146d, 146e shown in Fig. 25) that are bent downward in shape of semi-circular arcs. In the state in which the pot 130 (shown in Fig. 19) is housed in the upper casing 121, lower ends of the V-shaped bent parts as an example of the engagement protruding parts of the spring plates 146, 146 are in contact with the top lid 131 of the pot 130 and thus the spring plates 146, 146 press the pot 130 downward while undergoing elastic deformation. Provided on the upper side of the upper casing 121 are generally rectangular holes 121e (only one is shown in Fig. 23) through which the V-shaped bent parts of the spring plates 146, 146 are to be passed.

When the pot 130 is housed in the housing part, the V-shaped bent parts of the spring plates 146, 146 climb over the protruding parts 131c of the top lid 131 while being in contact with of the upper surface of the top lid 31 and thereafter engage with the recessed parts 131b.

The pot 130 housed in the housing part is biased downward by the spring plates 146, 146 provided on the upper side of the upper casing 121, and contact between the bottom part of the pot 130 and the heater part 122 (shown in Fig. 14) is thereby ensured, so that heat conduction between the heater part 122 and the pot 130 is improved. Portions of the pot that are heated by the heater part are not limited to the bottom part of the pot and a configuration may be employed in which a lower side surface thereof is also heated, for instance.

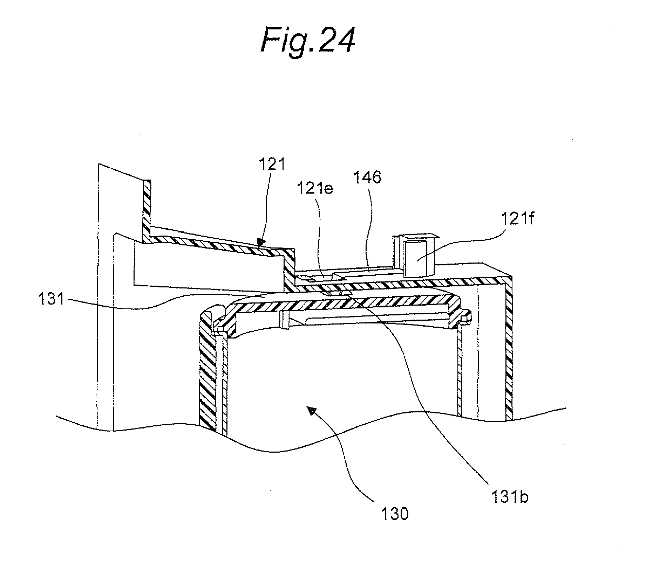

Fig. 24 shows a section of the important part of the upper casing 121 of the housing part in which the pot 130 has been inserted. The V-shaped bent parts of the spring plates 146 are passed through the holes 121e of the upper casing 121 and engage with the recessed parts 131b provided on the top lid 131 of the pot 130.

The V-shaped bent parts (engagement protruding parts) of the spring plates 146, 146 engage with the recessed parts 131b provided on top part of the pot 130 in the state in which the pot 130 is housed in the housing part, thus front-back and left-right positioning of the pot 130 can be attained while the pot 130 is biased downward by the spring plates 146, 146, so that contact between the pot 130 and the heater part 122 (shown in Fig. 14) can reliably be attained with a specified positional relation. Engagement recessed parts of the spring members may be engaged with protruding parts provided on the top part of the pot.

Fig. 25 shows a perspective view of the spring plate 146, 146. The spring plate 146 has a mounting part 146a having a screw hole 146g, a bent part 146b bent downward from the mounting part 146a, an elastic deformation part 146c bent from the bent part 146b and extending forward, a bent part 146d bent downward and frontward from an extremity of the elastic deformation part 146c, a bent part 146e bent upward and frontward from a lower end of the bent part 146d, and an extremity part 146f extending forward from an upper end of the bent part 146e. The spring plate 146, 146 undergoes elastic deformation chiefly in the elastic deformation part 146c.

The spring plates 146, 146 are used as the spring members in the second embodiment, whereas the spring members are not limited thereto and spring members in other forms may be used.

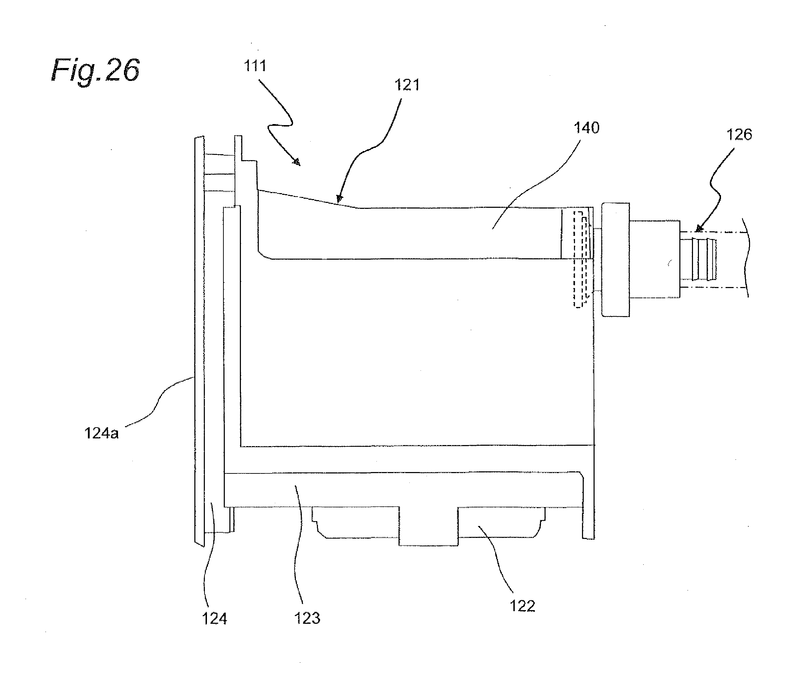

Fig. 26 shows a side view of the housing part and the connection part 126 of the steam producing unit 111.

As shown in Fig. 26, the steam producing unit 111 includes the pot 130 (shown in Fig. 19), the upper casing 121 made of heat-resistant resin, the connection part 126 to which the nozzle 132 (shown in Fig. 19) of the pot 130 is connected in the state in which the pot 130 is housed in the upper casing 121, the heater part 122 for heating the pot 130, a bottom plate 123 on which the heater part 122 is mounted and which is made of metal, and a frame part 124 which is on the front side of the upper casing 121, which has an insertion opening 124a, and which is made of heat-resistant resin. A heating portion of the heater part 122 protrudes from the bottom plate 123 so as to be shaped like a frustum of a cone. The upper casing 121, the bottom plate 123, and the frame part 124 constitute the housing part for housing the pot 130. In the embodiment, stainless steel is used for the bottom plate 123 on which the heater part 122 is mounted, in consideration of heat resisting property.

When the pot 130 (shown in Fig. 19) is inserted into the upper casing 121 through the insertion opening 124a, the nozzle 132 (shown in Fig. 19) of the pot 130 is guided in vertical and left-right directions toward a position for connection with the connection part 126 by a guiding part 140 provided on the upper side of the upper casing 121.
A steam temperature sensor 234 is provided in a path in the connection part 126 (in the housing part 192a shown in Fig. 27). The steam temperature sensor 234 detects a temperature of atmosphere in the steam path including the connection part 126 and the steam supply pipe 194 (shown in Fig. 15).

Fig. 27 shows a section of the connection part 126, numeral 191 denotes a nozzle guiding part having an insertion opening 191c for guiding the nozzle 132 (shown in Fig. 19) of the pot 130, numeral 192 denotes the connection part body having the housing part 192a connected to the nozzle guiding part 191 and a pipe connection part 192b communicating with the housing part 192a, and numeral 193 denotes a valve element as an example of the check valve provided in the housing part 192a of the connection part body 192. The nozzle guiding part 191 has a funnel-shaped receiving part 191a that increases in diameter toward front side and a flange part 191b that is provided on rear side of the receiving part 191a. A shaft part (not shown) orthogonal to a direction of a path from the nozzle guiding part 191 to the pipe connection part 192b of the connection part body 192 is provided on upper part of the valve element 193, and the valve element 193 itself is pivotably supported by the shaft part. The valve element 193 is biased toward the nozzle guiding part 191 by a torsion coil spring (not shown). The one end of the steam supply pipe 194 is connected to the pipe connection part 192b.

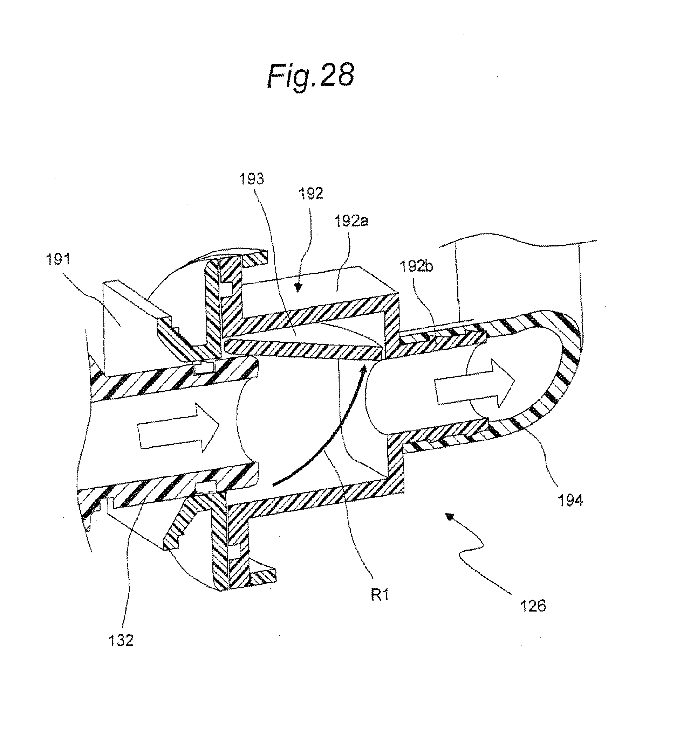

Once the nozzle 132 of the pot 130 (shown in Fig. 19) is connected to the connection part 126, as shown in Fig. 28, the valve element 193 biased toward the nozzle guiding part 191 pivots on upper part thereof in a direction of an arrow R1 so as to open the path through the connection part 126.

When the nozzle 132 of the pot 130 is not connected to the connection part 126, the path through the connection part 126 is closed by the valve element 193 provided in the connection part 126, and thus hot air from the heating chamber 112 (shown in Figs. 13 through 15) is prevented from reversely flowing into the housing part (121, 123, 124) on condition that the pot 130 is detached from the housing part, so that a burn of a user, damage to the upper casing 121 and/or the like of the housing part from a high temperature, and/or the like can be prevented.

The IH cooking heater 100 in accordance with the second embodiment that has an above configuration has effects similar to those of the IH cooking heater in accordance with the first embodiment.

The steam producing unit 111 is placed in the casing 101 so that the insertion opening of the housing part (121, 123, 124) of the steam producing unit 111 faces forward, the heating chamber 112 is placed on a lateral side of the steam producing unit 111 in the casing 101 so that the opening of the heating chamber 112 faces forward, thus the steam producing unit 111 and the heating chamber 112 can be arranged along a lateral direction on the front side of the casing 101, the upper surface of the casing 101 can be made flat so that cooktops and the like can be provided thereon, and a height of the casing 101 can be decreased so as to be easily suited to a built-in kitchen of JIS (Japanese Industrial Standards) under the restriction on the height thereof and the like.

The cooking device suited to a domestic built-in kitchen can be obtained by placement of the housing part (121, 123, 124) of the steam producing unit 111 and the heating chamber 112 on the front side in the casing 101 and placement of the heating devices (103A, 103B, 103C) for cooking on the top face side of the casing 101.

By simultaneous opening and closure of the insertion opening of the housing part (121, 123, 124) of the steam producing unit 111 and the opening of the heating chamber 112 by the single door 113 with handle that is provided on the front side of the casing 101, a number of components of the cooking device can be reduced and safety is improved because a number of times of unnecessary draws of the pot 130 from the housing part (121, 123, 124) is reduced in cooking with use of the heating chamber 112.

Though the IH cooking heater has been described as the cooking device for the second embodiment, the cooking device is not limited thereto and the invention may be applied to cooking devices such as microwave oven.

Though the guiding part 140 is provided on the upper side of the upper casing 121 so as to be integral therewith in the second embodiment, there may be provided a guiding part separate from the housing part.

The nozzle 132 of the pot 130 is guided by the guiding part 140 provided on the upper side of the guiding part 140 in the second embodiment, whereas the guiding part is not limited thereto but has only to guide the nozzle of the pot with respect to the vertical direction and the left-right direction toward the position for connection to the connection part when the pot is inserted from the insertion opening into the housing part.

Though the three IH heaters are used as the heating device for cooking in the second embodiment, the invention may be applied to a cooking device using one or two IH heaters or may be applied to a cooking device in which electric cooking stoves, gas cooking stoves or the like are used as the heating device for cooking, instead of IH heaters.

In the cooking device of the invention, healthy cooking can be performed by use of steam or superheated steam in a cooking heater (including that using IH heaters, electric cooking stoves such as electric heaters, or gas cooking stoves), a microwave oven or the like. In the cooking device of the invention, for instance, superheated steam or saturated steam having a temperature not lower than 100°C is supplied onto surfaces of food, the superheated steam or saturated steam deposited onto the surfaces of the food condenses and gives the food a great quantity of latent heat of condensation, therefore heat can efficiently be transmitted to the food, so that crispy roast of the surfaces of the food and cooking with satisfactory finish can be attained. The condensate water is deposited on the surfaces of the food, and salt content, oil content and the like drop with the condensate water, so that salt content, oil content and the like in the food can be reduced. Furthermore, the heating chamber is filled with the superheated steam or saturated steam so as to be absent from oxygen, and thus cooking by which oxidation of the food is suppressed can be performed.

Though the specific embodiments of the invention have been described, the invention is not limited to the first and second embodiments described above and can be embodied with modification in various ways within the scope of the invention.

### REFERENCE SIGNS LIST

1 cabinet
2 top plate
3A, 3B IH heaters
3C electric heater
4 top surface operation part
5 air intake port
6 air discharge port
10 front panel
11 steam producing unit
12 heating chamber
13 door with handle
20 thermostat
21 upper casing
22 heater part
23 bottom plate
24 frame part
24a insertion opening
25 front plate
26 connection part
28 reed switch
29 heater part temperature sensor
30 pot
31 top lid
32 nozzle
33 nozzle base
34 float housing part
35 heating container
36 stopper
40 guiding part
41 mounting plate
42 limit switch
43 detection lever
44 arm
45 base for springs
46 spring plate
47 reed switch mounting plate
50 handle
60 float
61 float body
62 magnet housing part
63 protruding part
64 lid
70 temperature increase detection part
100 IH cooking heater
101 casing
102 top plate
103A right IH heater
103B left IH heater
103C center IH heater
104 top surface operation part
105 air intake port
106 air discharge port
107 air discharge port
108 tray
110 front panel
111 steam producing unit
112 heating chamber
113 door with handle
115 partition
121 upper casing
122 heater part
123 bottom plate
124 frame part
124a insertion opening
126 connection part
130 pot
131 top lid
131a protruding part
131b recessed part
131c protruding part
132 nozzle
133 nozzle base
135 heating container
140 guiding part
146 spring plate
147 reed switch mounting plate
150 handle
150a handle base
150b handle annular part
153 rib
171 lower heat insulator
172 upper heat insulator
173 right heat insulator
174 left heat insulator
180 front operation panel
180a operation part
180b display part
181 upper cover
181a steam blow-off hole
182 upper heater housing part
183 lower cover
184 lower heater housing part
185 air discharge duct
186 catalyst for smoke removal and deodorization
187 steam supply opening
194 steam supply pipe
200 control device
210 driving circuit block
201 operation unit
202 display unit
203 reporting unit
212 right IH temperature sensor
214 left IH temperature sensor
216 center IH temperature sensor
211 driving circuit
213 driving circuit
215 driving circuit
217 cooling fan driving circuit
218 cooling fan
221 upper heater driving circuit
222 upper heater
223 upper heater temperature sensor
224 chamber inside temperature sensor
225 lower heater driving circuit
226 lower heater
227 lower heater temperature sensor
228 exhaust fan driving circuit
229 exhaust fan
231 heater part driving circuit
233 heater part temperature sensor
234 steam temperature sensor
235 cooling fan driving circuit
236 cooling fan
237 high-temperature caution lamp
300 built-in kitchen
301 cabinet
302 top plate
303 recessed part for cooking equipment

## Claims

1. A cooking device comprising:
a detachable pot having a nozzle for steam blow-off and a handle,
a housing part for housing the pot,
a connection part to which the nozzle of the pot housed in the housing part is connected,
a heater part for heating the pot housed in the housing part, and
a heating chamber that is supplied with steam from the pot.

2. The cooking device as claimed in Claim 1, further comprising
a guiding part for guiding the nozzle of the pot with respect to a vertical direction and a left-right direction toward a position for connection to the connection part when the pot is inserted into the housing part from an insertion opening located on a front side of the cooking device.

3. The cooking device as claimed in Claim 2, wherein
the guiding part is provided on an upper side of the housing part and
the guiding part has an upper tapered surface which gradually lowers from a side of the insertion opening toward a side of the connection part, and opposed side tapered surfaces which are provided on both sides of the upper tapered surface, with distances between the opposed side tapered surfaces gradually narrowing toward the side of the connection part.

4. The cooking device as claimed in any one of Claims 1 through 3, wherein
the connection part is arranged and configured to be capable of fluctuating or swinging to follow the nozzle of the pot to be housed in the housing part.

5. The cooking device as claimed in any one of Claims 1 through 4, further comprising
a front plate that is arranged at a lower part in the insertion opening of the housing part in such a manner that the front plate is not in contact with a metal part that is to be heated by the heater part.

6. The cooking device as claimed in any one of Claims 1 through 5, further comprising
a pot detection part for detecting whether the pot has been housed in the housing part.

7. The cooking device as claimed in any one of Claims 1 through 6, further comprising
a water detection part for detecting whether a water level in the pot is above a predetermined water level.

8. The cooking device as claimed in any one of Claims 1 through 7, further comprising
a temperature sensor for detecting a temperature of the heater part, and
a temperature increase detection part for detecting a quantity of an increase in the temperature of the heater part in a predetermined period on basis of the temperature of the heater part detected by the temperature sensor.

9. The cooking device as claimed in any one of Claims 1 through 8, further comprising
an energization interrupting part for interrupting energization of the heater part on condition that the temperature of the heater part is not lower than a predetermined temperature.

10. The cooking device as claimed in any one of Claims 1 through 9, further comprising
a fan for discharging air, taken in from the insertion opening on the front side of the housing part, through a ventilation path to rear of the housing part.

11. The cooking device as claimed in any one of Claims 1 through 10, wherein
the pot includes a heating container mounted with the handle,
a plurality of protrusions are provided on a surface of the handle that faces the heating container, and
the handle and the heating container are in point contact or in line contact with each other through the plurality of protrusions.

12. The cooking device as claimed in any one of Claims 1 through 11, further comprising
a check valve provided in the connection part to close a path through the connection part when the nozzle of the pot is not connected to the connection part.

13. The cooking device as claimed in any one of Claims 1 through 12, wherein
the heater part is arranged to heat at least a bottom part of the pot housed in the housing part, and
the cooking device comprises a spring member provided on an upper side of the housing part to bias downward the pot housed in the housing part.

14. The cooking device as claimed in Claim 13, wherein
the spring member includes an engagement protruding part or an engagement recessed part that engages with an recessed part or a protruding part provided on top of the pot while the pot is housed in the housing part.

15. The cooking device as claimed in any one of Claims 1 through 14, further comprising
a casing inside which the pot, the housing part, the connection part, the heater part, and the heating chamber are placed,
wherein the housing part is arranged in the casing, with the insertion opening of the housing part facing forward, and
wherein the heating chamber is arranged on a lateral side of the housing part in the casing, with an opening of the heating chamber facing forward.

16. The cooking device as claimed in Claim 15, further comprising
a heating device for cooking that is placed on a top face of the casing.

17. The cooking device as claimed in Claim 15 or 16, further comprising
a single door provided on a front side of the casing to simultaneously open or close the insertion opening of the housing part and the opening of the heating chamber.
